# EUROPÄISCHE PATENTSCHRIFT

(11) **EP 2 196 117 B1**
(45) Veröffentlichungstag und Bekanntmachung des Hinweises auf die Patenterteilung: **12.11.2014**
(21) Anmeldenummer: 08021442.2
(22) Anmeldetag: 10.12.2008
(51) Int. Cl.: A47J 31/54, A47J 31/44

(54) **Brühmaschine**
Brewing machine
Machine d'infusion

(43) Veröffentlichungstag der Anmeldung: 16.06.2010
(73) Patentinhaber: Tchibo GmbH, 22297 Hamburg (DE)
(72) Erfinder: Balkau, Werner, 8750 Glarus (CH)
(74) Vertreter: UEXKÜLL & STOLBERG

(56) Entgegenhaltungen:
- CH-A5- 693 016
- DE-U1- 20 100 700
- DE-U1- 20 304 134
- DE-U1- 20 312 091
- DE-U1-202004 021 347
- FR-A- 2 799 630
- US-A- 4 725 714

## Beschreibung

Die Erfindung betrifft eine Brühmaschine, die zum Fertigen eines heißen Getränks mittels einer Brühsubstanz (z.B. Mahlkaffee) und Brühwasser eingerichtet ist und eine Heißwassereinrichtung und eine Steuerung aufweist, wobei ein Drehknopf als Bedienungselement für die Steuerung vorgesehen ist.

Derartige Brühmaschinen sind im Stand der Technik in zahlreichen Bauformen bekannt. Vielfach sind die Brühmaschinen zur Verwendung mit einer Portionspackung (z.B. einer Portionskapsel oder einem Filterpad) eingerichtet, die die Brühsubstanz enthält, während bei anderen Bauformen der Benutzer die Brühsubstanz in loser Form in die Brühmaschine einfüllt. Die Heißwassereinrichtung weist in der Regel einen Vorratsbehälter für das Brühwasser, einen Boiler zum Aufheizen des Brühwassers, eine Förderpumpe sowie verbindende Leitungen auf. Ferner kann die Heißwassereinrichtung Steuerelemente enthalten, z.B. ein Drosselventil, um den Fluss des Brühwassers einzustellen. Die Steuerung der Brühmaschine kann elektronische Teile oder einen Mikroprozessor aufweisen, kann aber auch ausschließlich mit mechanisch betätigten Schaltern aufgebaut sein. Mit dem Drehknopf lässt sich z.B. eine Betriebsart auswählen (z.B. Brühen von Espresso bei hohem Druck oder Brühen von Filterkaffee bei niedrigem Druck) oder die gewünschte Menge an Brühgetränk (z.B. für eine große Tasse oder für eine kleine Tasse).

So zeigt die DE 203 04 134 U1 ein Bedienungsfeld für eine Kaffeemaschine mit einem Drehwahlschalter, mit dem die drei Betriebsarten oder Gerätefunktionen "Espresso", "Kaffee" und "Dampf" eingestellt werden können. Um die ausgewählte Gerätefunktion zu starten, muss der Benutzer einen im Drehwahlschalter integrierten oder am Drehwahlschalter angebrachten Druckknopfschalter betätigen. Zusätzlich ist noch ein Ein- und Ausschalter vorgesehen.

Aus der EP 1 224 894 B1 ist ein Kaffeeautomat (Espresso-Automat) bekannt, bei dem einzelne Zubereitungsvarianten mit einem rastbaren Drehknopf ausgewählt werden. Um den Brühvorgang zu starten, muss ebenfalls eine Taste gedrückt werden, die zentral in dem Drehknopf angeordnet ist. Bei einer Varianten ist der Drehknopf als Ganzes axial verschiebbar und muss zum Auslösen des Brühvorgangs gedrückt werden. Auch bei dieser Brühmaschine ist ein separater Ein- und Ausschalter vorgesehen.

In der DE 10 2004 029 126 A1 ist eine Brühmaschine mit einem Bedienfeld beschrieben, bei dem die Abgabemenge an Brühgetränk mit einem Drehknopf ausgewählt wird. Durch Drücken einer Auslösetaste "Kaffee" wird der Brühvorgang für Kaffee gestartet. Ferner ist eine Vorwahltaste "Dampf" zur Dampferzeugung vorgesehen. Auch in diesem Fall enthält das Bedienfeld einen separaten Ein- und Ausschalter.

Bei den vorbekannten Brühmaschinen muss der Benutzer also immer zwei verschiedene Arten von Schalter betätigen, um einen Brühvorgang zu starten, nämlich zum einen einen Drehschalter für die Vorauswahl (Drehbewegung) und zum anderen einen Starter (axiale Bewegung). Dies ist relativ umständlich. Ferner kann es unter Umständen längere Zeit dauern, bis der Benutzer das gewünschte Kaffeegetränk erhält, wenn nämlich nach dem Drücken des Starters zunächst noch das Brühwasser aufgeheizt werden muss.

Aus der FR 2 799 630 A1 ist eine Brühmaschine bekannt, bei der ein Drehknopf als Bedienungselement für die Steuerung vorgesehen ist. Die Heißwassereinrichtung der Brühmaschine ist in einer Null-Stellung des Drehknopfs ausgeschaltet. In einer definierten Zwischenposition des Drehknopfs veranlasst die Steuerung ein Aufheizen von Brühwasser mittels der Heißwassereinrichtung auf eine vorgegebene Brühtemperatur. Bei Weiterdrehen des Drehknopfs über die Vorheiz-Stellung hinaus (und über eine weitere Zwischenstellung zum Komprimieren des Kaffeepulvers hinaus) in eine Brüh-Stellung veranlasst die Steuerung ein Durchleiten des aufgeheizten Brühwassers durch die Brühsubstanz.

Es ist Aufgabe der Erfindung, eine Brühmaschine mit mehreren Gerätefunktionen (z.B. voneinander verschiedenen Brühdrücken) zu schaffen, die sich besonders einfach bedienen lässt.

Diese Aufgabe wird gelöst durch eine Brühmaschine mit den Merkmalen des Anspruchs 1. Vorteilhafte Ausgestaltungen ergeben sich aus den Unteransprüchen.

Die erfindungsgemäße Brühmaschine ist zum Fertigen eines heißen Getränks mittels einer Brühsubstanz und Brühwasser eingerichtet und weist eine Heißwassereinrichtung und eine Steuerung auf. Als Bedienungselement für die Steuerung ist ein Drehknopf vorgesehen. Die Heißwassereinrichtung ist in einer Null-Stellung des Drehknopfs ausgeschaltet. Die Steuerung ist dazu eingerichtet, in einer definierten Zwischenposition des Drehknopfes, der Vorheiz-Stellung, ein Aufheizen von Brühwasser mittels der Heißwassereinrichtung auf eine vorgegebene Brühtemperatur zu veranlassen. Bei Weiterdrehen des Drehknopfs über die Vorheiz-Stellung hinaus in eine Brüh-Stellung wird ein Durchleiten des aufgeheizten Brühwassers durch die Brühsubstanz veranlasst.

Die erfindungsgemäße Brühmaschine lässt sich also grundsätzlich mit Hilfe des Drehknopfs ausschließlich über Drehbewegungen bedienen, ohne dass ein Startknopf zum Auslösen eines Vorgangs gedrückt werden muss. In der Null-Stellung des Drehknopfs ist die Heißwassereinrichtung ausgeschaltet, so dass keine hohe Ströme in der Brühmaschine fließen, wie sie zum Betreiben einer Heizung des Boilers oder einer Pumpe für das Brühwasser erforderlich sind. In der Null-Stellung des Drehknopfs kann sich die Brühmaschine in einem Standby-Modus befinden, was sich mit ganz niedriger Leistung realisieren lässt, so dass die Steuerung bei Betätigung des Drehknopfs sofort anspricht. In der Null-Stellung des Drehknopfs kann die Brühmaschine aber auch ganz ausgeschaltet sein, so dass überhaupt kein Strom fließt. Wenn der Drehknopf in die Vorheiz-Stellung gedreht wird, wird das Brühwasser aufgeheizt. Nach Erreichen der vorgegebenen Brühtemperatur kann der Benutzer den Drehknopf in eine Brüh-Stellung weiterdrehen, um den Brühvorgang zu starten. Dabei beginnt der Brühvorgang sofort, weil das Brühwasser bereits vorgeheizt ist.

Die Bedienung der erfindungsgemäßen Brühmaschine ist also sehr einfach und intuitiv und erfordert lediglich die Bedienung des Drehknopfs durch eine Drehbewegung, also in einem einzigen Bewegungsablauf. Es ist nicht erforderlich, einen Starter zu drücken.

Vorzugsweise ist der Drehknopf das einzige Bedienungselement der Brühmaschine. Wie bereits angedeutet, kann sogar ein separater Ein- und Ausschalter (Netzschalter) entbehrlich sein, weil die großen Stromverbraucher der Brühmaschine erst bei Drehen des Drehknopfs aus der Null-Stellung eingeschaltet werden.

Erfindungsgemäß ist der Drehknopf von der Null-Stellung aus im Uhrzeigersinn in einen ersten Arbeitsbereich und im Gegenuhrzeigersinn in einen zweiten Arbeitsbereich drehbar. Dabei sind dem ersten Arbeitsbereich und dem zweiten Arbeitsbereich unterschiedliche Gerätefunktionen zugeordnet, z.B. voneinander verschiedene Brühdrücke (z.B. ein niedriger Druck für Filterkaffee und ein hoher Druck für Espresso). Dabei weisen sowohl der erste Arbeitsbereich des Drehknopfs als auch der zweite Arbeitsbereich des Drehknopfs jeweils eine Vorheiz-Stellung und eine Brüh-Stellung auf, wobei die Stellungen des Drehknopfs im ersten Arbeitsbereich und im zweiten Arbeitsbereich symmetrisch zueinander angeordnet sein können.

Wie die einzelnen Funktionen der Brühmaschine mit Hilfe des Drehknopfs ausgewählt und angesteuert werden, ist auf verschiedene Weisen möglich.

Bei einer bevorzugten Ausführungsform der Erfindung ist der Drehknopf mit einer Feder gekoppelt, die dazu eingerichtet ist, den Drehknopf aus einer Brüh-Stellung selbsttätig in die Vorheiz-Stellung zurückzudrehen. In diesem Fall kann der Benutzer den Drehknopf aus der Vorheiz-Stellung in eine Brüh-Stellung verdrehen und dann solange festhalten, bis eine Tasse mit heißem Getränk gefüllt ist. Dann lässt der Benutzer den Drehknopf los, und er geht unter der Wirkung der Feder in seine Ausgangsstellung zurück, nämlich die Vorheiz-Stellung. Bei dieser Ausführungsform ist es unerheblich, um welchen Winkel der Benutzer den Drehknopf aus der Vorheiz-Stellung in eine Brüh-Stellung verdreht. Da der Brühvorgang mit dem aufgeheizten Brühwasser schnell erfolgt (insbesondere bei einer kleinen Getränkemenge, z.B. im Fall von Espresso), stellt es keine Belastung für den Benutzer dar, wenn er den Drehknopf in der Brüh-Stellung hält, bis die Tasse voll ist.

Bei einer Variante ist der Drehknopf beim Weiterdrehen über die Vorheiz-Stellung hinaus in eine als Brüh-Stellung eingerichtete End-Stellung drehbar, in der vorzugsweise der Drehknopf einrastet. In diesem Fall ist es sinnvoll, wenn die Steuerung in der Endstellung des Drehknopfs dafür sorgt, dass eine vorgegebene Menge an Brühwasser durch die Brühsubstanz geleitet wird, damit z.B. die Tasse nicht überläuft. Dazu kann entweder eine vorbestimmte Brühwassermenge abgegeben werden (wobei die Brühwassermenge mit Hilfe eines Steuerelements erfasst wird) oder eine Brühwasser-Förderpumpe für eine vorbestimmte Zeit laufen. Besonders vorteilhaft ist ein Drehknopf, der in einer Brüh-Stellung vor der End-Stellung nicht einrastet, aber bereits den Brühvorgang auslöst, und beim Loslassen unter Federwirkung in die Vorheiz-Stellung zurückgeht, so dass der Benutzer beide Möglichkeiten der Bedienung hat.

Bei einer anderen bevorzugten Ausführungsform der Erfindung ist der Drehwinkel des Drehknopfs zwischen der Vorheiz-Stellung und einer Brüh-Stellung ein Maß für die Menge des durch die Brühsubstanz durchzuleitenden Brühwassers. Bei einer besonders vorteilhaften Ausgestaltung dieser Ausführungsform wirkt auf den Drehknopf ein Antrieb, z.B. mit einem Uhrwerk, um den Drehknopf von einer vorgewählten Brüh-Stellung während des Durchleitens des Brühwassers durch die Brühsubstanz in die Vorheiz-Stellung zurückzudrehen. Zur Bedienung dreht also der Benutzer den Drehknopf aus der Vorheiz-Stellung in eine Position, mit der er die Menge an zu benutzendem Brühwasser auswählt. Dabei startet der Brühvorgang sofort. Nachdem das Getränk in eine Tasse oder einen anderen Behälter gelaufen ist, befindet sich der Drehknopf bereits wieder in der Vorheiz-Stellung. Er braucht also vom Benutzer nicht zurückgedreht zu werden. Auch in diesem Fall ist die Bedienung der Brühmaschine sehr einfach und intuitiv und ermöglicht sogar eine Vorwahl der Menge an Brühgetränk.

Bei einer weiteren vorteilhaften Ausführungsform der Erfindung ist der Drehknopf auch axial betätigbar, aber nicht, um einen Brühvorgang auszulösen, sondern um unterschiedliche Gerätefunktionen auszuwählen, z.B. voneinander verschiedene Brühdrücke. Dabei kann der Drehknopf z.B. mittels eines Drückers axial betätigbar sein (z.B. als Ganzes oder über einen in seinem zentralen Bereich angeordneten Druckknopf), wobei die ausgewählte Gerätefunktion von einer Anzeigeeinrichtung (z.B. einer Kontrollleuchte) angezeigt wird. Diese Ausführungsform kann mit allen zuvor erläuterten Ausführungsformen kombiniert werden. Dabei wird die grundsätzliche Gerätefunktion (z.B. Brühen von Filterkaffee oder von Espresso) mit dem Drücker ausgewählt, während der Drehknopf in der zuvor erläuterten Weise zur intuitiven Bedienung eines Brühvorgangs dient.

Wenn sich der Drehknopf in der Vorheiz-Stellung befindet, ist es vorteilhaft, wenn die Temperatur des Brühwassers mittels der Heißwassereinrichtung unter Steuerung durch einen Thermostaten bei der vorgegebenen Brühtemperatur gehalten wird. Dann befindet sich die Brühmaschine in Bereitschaft und kann bei Bedarf sofort ein heißes Getränk ausgeben. Um keine Energie zu verschwenden, sollte der Benutzer diese Funktion nur verwenden, wenn sie benötigt wird. Bei einer komplexeren Ausgestaltung der Brühmaschine weist die Steuerung in diesem Zusammenhang eine Schaltuhr auf, die die Heizung des Boilers nach einer vorgegebenen Zeit abschaltet. Wenn der Benutzer die Brühmaschine danach erneut verwenden will, muss er zunächst den Drehknopf in die Null-Stellung drehen.

Vorzugsweise weist die Brühmaschine eine Signaleinrichtung auf, die dazu eingerichtet ist, das Erreichen der vorgegebenen Brühtemperatur anzuzeigen. Die Signaleinrichtung kann als Kontrollleuchte ausgestaltet sein, z.B. als konzentrisch zu dem Drehknopf angeordneter Leuchtring. Die Signaleinrichtung zeigt dem Benutzer an, wann er den Drehknopf in eine Brüh-Stellung drehen kann, um das gewünschte Getränk zu erhalten.

Wie bereits eingangs angedeutet, kann die Steuerung der Brühmaschine in unterschiedlicher Weise ausgestaltet sein. Die Verwendung elektronischer Bauteile und von Mikroprozessoren eröffnet zahlreiche Möglichkeiten. Vielfach genügt aber bereits eine mechanische Steuerung, die in der Regel preisgünstiger ist. Dazu kann der Drehknopf mit mindestens einer Kurvenscheibe gekoppelt sein, die dazu eingerichtet ist, in Abhängigkeit von der Stellung des Drehknopfs mit der Steuerung verbundene Mikroschalter zu betätigen. Auf diese Weise lässt sich auch eine einfache Logik aufbauen, mit der z.B. beim Einschalten einer gewünschten Gerätefunktion eine andere Gerätefunktion blockiert wird. Größere Stromverbraucher wie z.B. die Heizung des Boilers oder die Förderpumpe für das Brühwasser können über Relais angesteuert, aber auch direkt über geeignete Mikroschalter geschaltet werden. Wie nach dem Festlegen eines Konzepts für die Bedienung der Brühmaschine mit Hilfe des Drehschalters eine geeignete Steuerung ausgeführt werden kann, ist dem Fachmann geläufig.

Abgesehen von der Bedienung mit Hilfe des Drehknopfs ist die erfindungsgemäße Brühmaschine in herkömmlicher Weise konstruiert, wie in zahlreichen Varianten aus dem Stand der Technik bekannt.

Im Folgenden wird die Erfindung anhand von Ausführungsbeispielen weiter beschrieben. Die Zeichnungen zeigen in
- Figur 1: eine Draufsicht auf den Drehknopf für die Bedienung einer Brühmaschine in einer ersten Ausführungsform, wobei verschiedene Stellungen des Drehknopfs dargestellt und in ein Ablaufdiagramm eingebunden sind,
- Figur 2: eine Draufsicht auf den Drehknopf für die Bedienung einer zweiten Ausführungsform einer Brühmaschine, wobei die Teilfiguren a bis d verschiedene Stellungen des Drehknopfs während eines Brühvorgangs zeigen,
- Figur 3: eine Draufsicht auf den Drehknopf für die Bedienung einer dritten Ausführungsform einer Brühmaschine, nämlich einer erfindungsgemäßen Brühmaschine, wobei die Teilfiguren a bis e verschiedene Stellungen des Drehknopfs bei zwei verschiedenen Brühvorgängen zeigen,
- Figur 4: eine Draufsicht auf den Drehknopf für die Bedienung einer vierten Ausführungsform einer Brühmaschine, wobei die Teilfiguren a bis e verschiedene Stellungen des Drehknopfs bei Brühvorgängen mit unterschiedlichen Brühdrücken zeigen,
- Figur 5: eine Draufsicht auf den Drehknopf für die Bedienung einer fünften Ausführungsform einer Brühmaschine, wobei die Teilfiguren a bis f die Bedienung des Drehknopfs für Brühvorgänge bei unterschiedlichen Brühdrücken veranschaulichen,
- Figur 6: eine Draufsicht auf den Drehknopf für die Bedienung einer weiteren Ausführungsform einer Brühmaschine, wobei die Teilfiguren a bis c verschiedene Schritte beim Bedienen der Brühmaschine zeigen, und
- Figur 7: eine Draufsicht auf den Drehknopf für die Bedienung einer weiteren Ausführungsform einer Brühmaschine, die ähnlich bedient wird wie die Ausführungsform gemäß Figur 6, wobei die Teilfiguren a bis d verschiedene Schritte bei der Bedienung der Brühmaschine veranschaulichen.

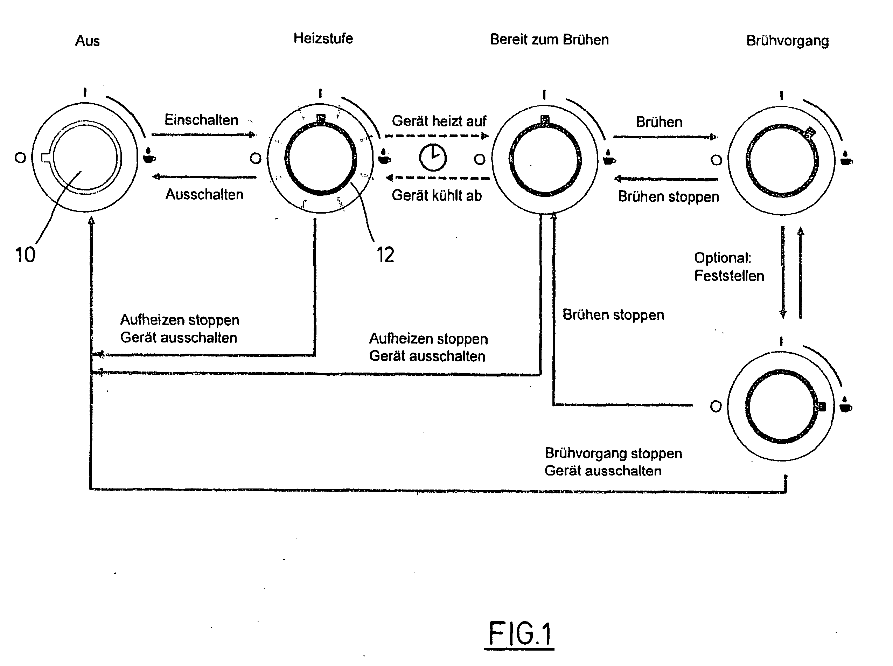

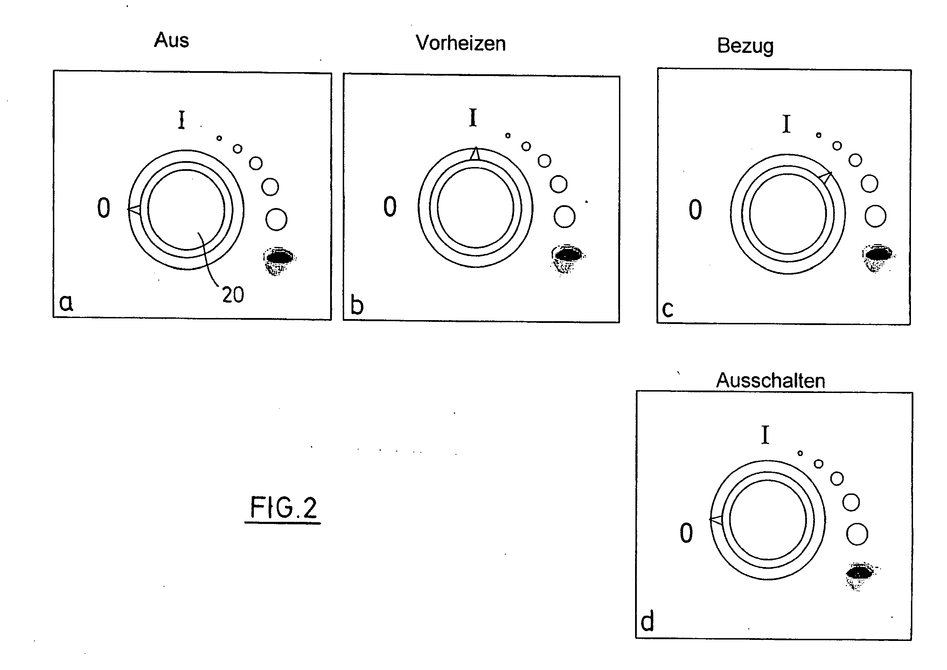

Im Folgenden werden anhand der Figuren 1 bis 7 verschiedene Ausführungsbeispiele für die Bedienung von Brühmaschinen mit Hilfe eines Drehknopfs erläutert. Die Figur 1 ist als Flussdiagramm gestaltet, während die Figuren 2 bis 7 in einzelnen Teilbildern verschiedene Stellungen des Drehknopfs zeigen, um die Bedienung der Brühmaschine zu veranschaulichen.

Wie die Brühmaschine im Prinzip konstruiert sein kann, ist aus dem Stand der Technik bekannt. So zeigt z.B. die DE 10 2004 056 224 A1 eine Brühmaschine, die bei drei verschiedenen Brühdrücken (für Filterkaffee, Caffè Crema und Espresso) betrieben werden kann. Wesentliche Komponenten einer Brühmaschine sind eine Heißwassereinrichtung und eine Steuerung, wie bereits eingangs erläutert. An dieser Stelle braucht daher nicht mehr auf den weiteren Aufbau einer Brühmaschine eingegangen zu werden.

Ferner ist einem Fachmann bekannt, wie man verschiedene Stellungen eines Drehschalters oder Drehknopfs in Anweisungen für die Steuerung einer Brühmaschine umsetzen kann. Dazu sind weiter oben einige grundsätzliche Beispiele genannt, weshalb dazu an dieser Stelle ebenfalls keine näheren Angaben erforderlich sind.

Anhand von Figur 1 wird nun die Bedienung einer ersten Ausführungsform einer Brühmaschine mit Hilfe eines Drehknopfs 10 nach Art eines Flussdiagramms erläutert.

Wenn sich der Drehknopf 10 in der Null-Stellung befindet ("Aus"), ist die Heißwassereinrichtung der Brühmaschine ausgeschaltet. Auf der Skala, die den Drehknopf umgibt, ist diese Stellung mit dem Symbol "0" gekennzeichnet.

Wenn der Benutzer den Drehknopf 1 in die mit "I" bezeichnete Stellung dreht ("Heizstufe"), die Vorheiz-Stellung, schaltet die Steuerung der Brühmaschine die Heizung des Boilers ein, und Brühwasser wird auf eine vorgegebene Brühtemperatur erhitzt. Vorzugsweise ist diese Brühtemperatur fest vorgegeben und kann vom Benutzer nicht beeinflusst werden. Während des Aufheizens blinkt eine Kontrollleuchte 12, die im Ausführungsbeispiel als konzentrisch zu dem Drehknopf 10 angeordneter Leuchtring gestaltet ist. Die Heizeinrichtung der Brühmaschine enthält im Ausführungsbeispiel einen Thermostaten, der dafür sorgt, dass die Temperatur des Brühwassers (genauer gesagt, des im Boiler befindlichen Brühwassers) bei der vorgegebenen Brühtemperatur gehalten wird, solange sich der Drehknopf 10 in der Vorheiz-Stellung befindet. Immer wenn der Boiler aufgeheizt wird, blinkt die Kontrollleuchte 12.

Wenn die Kontrollleuchte 12 in der Vorheiz-Stellung des Drehknopfes 10 dauerhaft leuchtet, ist die Brühmaschine bereit zum Brühen ("Bereit zum Brühen"). Um den Brühvorgang durchzuführen ("Brühvorgang"), hat der Benutzer der Ausführungsform gemäß Figur 1 zwei Möglichkeiten: Zum einen kann er den Drehknopf 10 im Uhrzeigersinn etwas auf das Kaffeetassensymbol zu drehen und solange festhalten, bis die Tasse voll ist. Wenn er den Drehknopf 10 anschließend los lässt, sorgt eine an dem Drehknopf 10 angreifende Feder dafür, dass sich der Drehknopf 10 wieder selbsttätig in die Vorheiz-Stellung zurückdreht. Zum anderen kann der Benutzer den Drehknopf 10 bis zu dem Kaffeetassensymbol drehen (in Figur 1 rechts unten dargestellt), wo der Drehknopf 10 einrastet. In diesem Fall wird eine vorgegebene Menge an Brühwasser durch die Brühsubstanz geleitet, also eine vorgegebene Menge an heißem Getränk aufgebrüht; bevor der Benutzer eine weitere Tasse aufbrühen kann, muss er den Drehknopf 10 in die Vorheiz-Stellung zurückdrehen.

Um die Brühmaschine auszuschalten, dreht der Benutzer den Drehknopf 10 zurück in die Null-Stellung.

In Figur 1 sind die Bedienungsmöglichkeiten für den Benutzer, die ausschließlich aus Drehbewegungen des Drehknopfs 1 bestehen, durch durchgezogene Pfeile dargestellt. Die gestrichelten Pfeile deuten von dem Thermostaten geregelte Funktionen der Brühmaschine an.

In Figur 2 ist die Bedienung einer weiteren Ausführungsform einer Brühmaschine veranschaulicht. Die Figur 2 ist nicht als Flussdiagramm gestaltet, sondern zeigt einzelne Stellungen des hier mit 20 bezeichneten Drehknopfs in den Teilfiguren a bis d.

In Figur 2a befindet sich der Drehknopf 20 in der Null-Stellung. Zum Vorheizen dreht ihn der Benutzer in die Vorheiz-Stellung "I", Figur 2b. Wenn eine in Figur 2 nicht eingezeichnete Kontrollleuchte (z.B. ein Leuchtring am Drehknopf 20 wie in der Ausführungsform gemäß Figur 1) dauerhaft leuchtet, weiß der Benutzer, dass die Brühmaschine für den Brühvorgang bereit ist. Er kann dann den Drehknopf 20 im Uhrzeigersinn über die Vorheiz-Stellung hinausdrehen und dabei durch die Position, in der er den Drehknopf 20 los lässt, die Menge an aufzubrühendem Getränk auswählen, Figur 2c. Auf der den Drehknopf 20 umgebenden Skala ist dies durch größer werdende Kreise angedeutet. Der Brühvorgang startet, sobald der Drehknopf 20 die Vorheiz-Stellung verlässt.

Im Ausführungsbeispiel läuft der Drehknopf 20 während des Brühvorgangs von der Brüh-Stellung, in der ihn der Benutzer losgelassen hatte, zurück in die Vorheiz-Stellung "I". Dafür sorgt ein Uhrwerk. Solange sich der Drehknopf in einer Brüh-Stellung befindet, also irgendwo jenseits der Vorheiz-Stellung "I", ist im Ausführungsbeispiel eine Förderpumpe der Heißwassereinrichtung in Betrieb. Sie schaltet ab, sobald der Drehknopf wieder die Vorheiz-Stellung "I" erreicht. Bei dieser Ausführungsform wird also die Menge an aufgebrühtem Getränk letztlich durch die Rücklaufzeit des Drehknopfs 20 bestimmt.

Wenn der Benutzer die Brühmaschine abschalten will, dreht er den Drehknopf 20 zurück in die Null-Stellung, siehe Figur 2d.

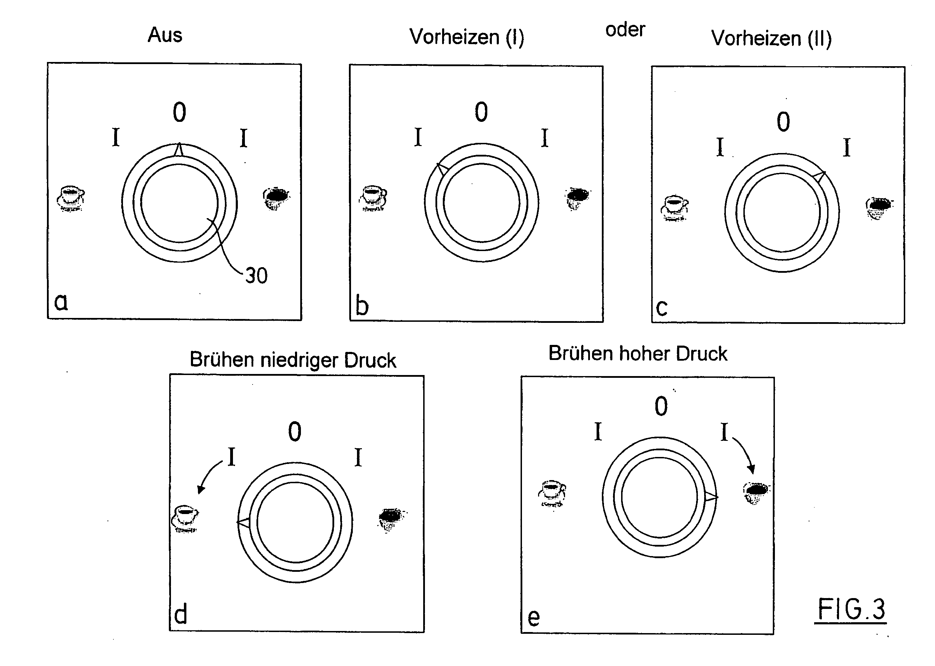

Eine weitere Ausführungsform einer Brühmaschine ist für zwei Brühdrücke ausgelegt, z.B. zum Brühen von Filterkaffee und zum Brühen von Espresso. Die Bedienung dieser Brühmaschine ist in Figur 3 anhand der Teilfiguren a bis e erläutert, in einer Form ähnlich wie in Figur 2. In Figur 3 ist der Drehknopf mit 30 bezeichnet.

Der Drehknopf 30 steuert die Maschinenfunktionen ähnlich wie in dem Ausführungsbeispiel gemäß Figur 1. Diesmal befindet sich jedoch die Null-Stellung in der Mitte, siehe Figur 3a. Der Benutzer kann nun den Drehknopf 30 im Gegenzeigersinn drehen, um das Brühwasser vorzuheizen (Figur 3b) und bei niedrigem Brühdruck Filterkaffee zu brühen (Figur 3d), oder er kann den Drehknopf 30 im Uhrzeigersinn verdrehen, um das Brühwasser aufzuheizen (Figur 3c) und bei hohem Brühdruck Espresso aufzubrühen (Figur 3e). Für das Brühen bei niedrigem Druck und für das Brühen bei hohem Druck wird der Drehknopf 30 jeweils so benutzt, wie anhand von Figur 1 erläutert. Auch bei dem Ausführungsbeispiel gemäß Figur 3 kann eine Kontrollleuchte vorgesehen sein, die anzeigt, wenn die Brühtemperatur erreicht ist.

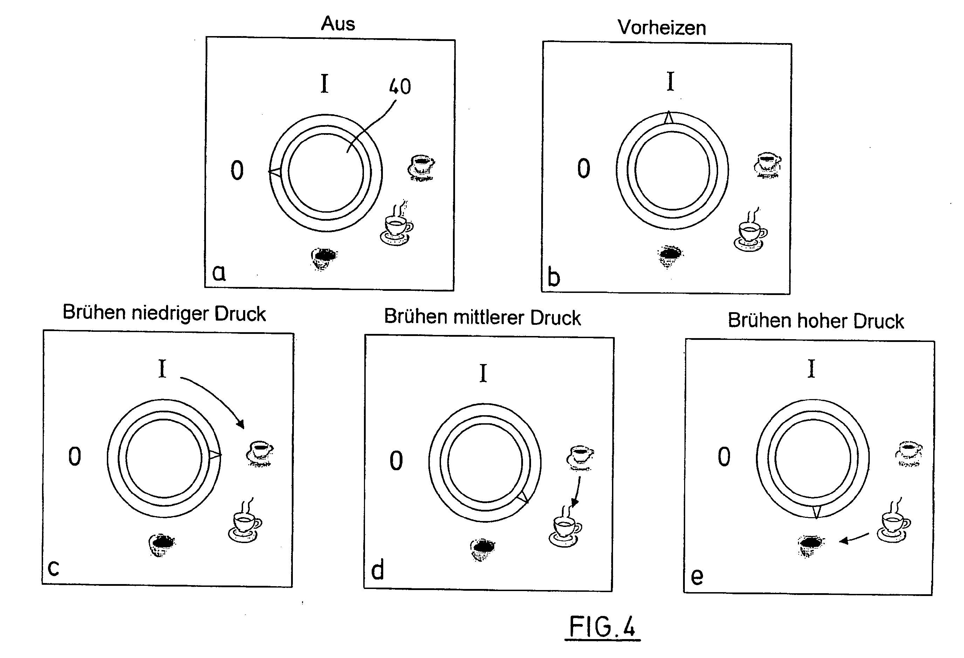

Die Figur 4 zeigt die Bedienung einer weiteren Ausführungsform einer Brühmaschine mit Hilfe eines Drehknopfs, der hier mit 40 bezeichnet ist.

In Figur 4a befindet sich der Drehknopf 40 in der Null-Stellung. Zum Vorheizen des Brühwassers wird er in die Vorheiz-Stellung "I" gedreht, Figur 4b. Bei dieser Ausführungsform besteht die Möglichkeit, ein heißes Getränk bei drei verschiedenen Drücken zu fertigen, z.B. Filterkaffee (niedriger Druck, Figur 4c), Caffè Crema (mittlerer Druck, Figur 4d) und Espresso (hoher Druck, Figur 4e), jeweils in einer vorgegebenen Menge. Dazu wird der Drehknopf 40 auf das entsprechende Symbol gestellt, wo er jeweils einrastet.

Der Brühvorgang beginnt bereits, wenn der Drehknopf 40 die Vorheiz-Stellung "I" verlassen hat, wobei in dem Winkelbereich zwischen der Vorheiz-Stellung "I" und dem Symbol für niedrigen Druck der Brühdruck niedrig ist, im Winkelbereich zwischen dem Symbol für niedrigen Druck und dem Symbol für mittleren Druck mittelhoch ist und in den hohen Druckbereich geht, sobald der Drehknopf 40 über das Symbol für mittleren Druck hinausgedreht wird. Da der Benutzer den Drehknopf 40 in aller Regel schnell bis zu dem gewünschten Symbol drehen wird, steht auch beim Brühen von Espresso praktisch während der gesamten Brühzeit der hohe Druck zur Verfügung. Diese Art der Bedienung hat den Vorteil, dass kein separater Drücker zum Starten des Brühvorgangs erforderlich ist.

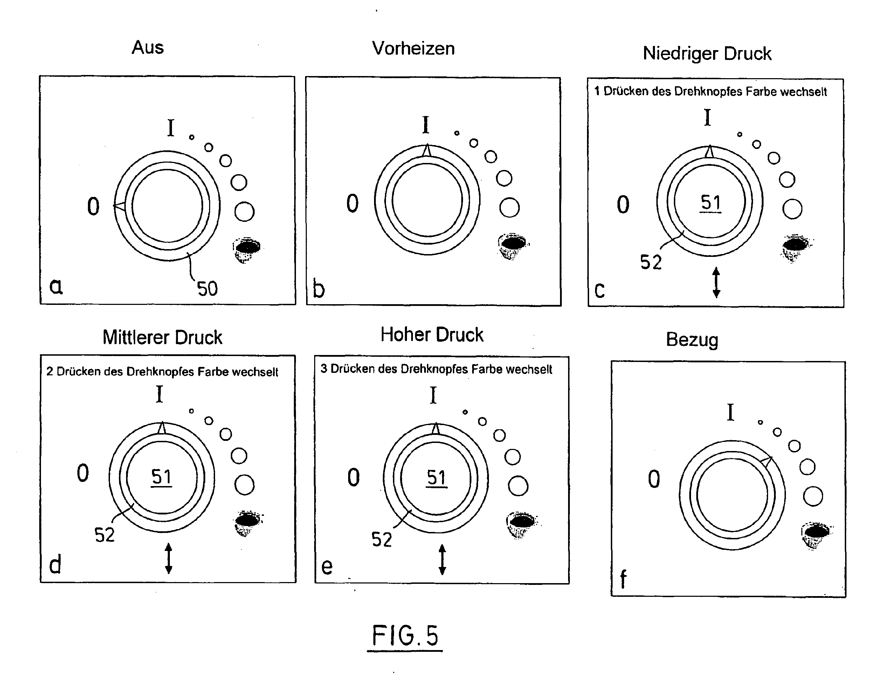

In Figur 5 ist die Bedienung einer weiteren Ausführungsform einer Brühmaschine veranschaulicht, die ebenfalls für drei verschiedene Brühdrücke ausgelegt ist. Die Auswahl des Brühdrucks erfolgt hier durch Drücken eines Tasters. Im Gegensatz zu den aus dem Stand der Technik bekannten Brühmaschinen braucht jedoch zum Starten des Brühvorgangs kein Knopf gedrückt zu werden.

In Figur 5a befindet sich der hier mit 50 bezeichnete Drehknopf in seiner Null-Stellung, und die Brühmaschine ist ausgeschaltet. Zum Aufheizen des Brühwassers wird der Drehknopf 50 in die Vorheiz-Stellung "I" gedreht, Figur 5b. Nun bestimmt der Benutzer den Brühdruck. Zur Auswahl eines niedrigen Drucks drückt er dazu einmal auf einen zentral in dem Drehknopf 50 angeordneten Drücker 51. Dass die Steuerung der Brühmaschine diesen Befehl angenommen hat, wird durch die Farbe einer Kontrollleuchte angezeigt, im Ausführungsbeispiel ein konzentrisch an dem Drehknopf angeordneter Leuchtring 52, Figur 5c. Wenn der Benutzer ein weiteres Mal den Drücker 51 betätigt, stellt die Steuerung der Brühmaschine einen mittleren Brühdruck ein, siehe Figur 5d, was durch einen Farbwechsel der Kontrollleuchte 52 angezeigt wird. Bei einer dritten Betätigung des Drückers 51 wird in der Brühmaschine ein hoher Brühdruck vorgewählt, und die Farbe der Kontrollleuchte 52 wechselt erneut.

Bei dem Drücker 51 kommt es nicht darauf an, wie schnell die einzelnen Betätigungen erfolgen. Vielmehr sorgt jede einzelne Betätigung für eine Änderung der Brühdruckeinstellung, was in eindeutiger Weise durch die Farbe der Kontrollleuchte 52 angezeigt wird. Die Kontrollleuchte 52 dient im Ausführungsbeispiel auch als Anzeige für das Erreichen der Brühtemperatur.

Wenn die Kontrolleuchte 52 blinkt, heizt der Boiler das Brühwasser auf. Wenn die vorgegebene Brühtemperatur erreicht ist, leuchtet die Kontrollleuchte 52 permanent, alles in der dem eingestellten Brühdruck entsprechenden Farbe.

Bei der Ausführungsform gemäß Figur 5 kann der Benutzer die Menge an aufzubrühendem Getränk einstellen, siehe Figur 5f. Dies erfolgt genauso wie im Zusammenhang mit der Ausführungsform gemäß Figur 2 beschrieben. Der Drehknopf 50 rastet dabei in keiner der Brüh-Stellungen ein, sondern läuft während des Brühens, angetrieben von einem Uhrwerk, in die Vorheiz-Stellung "I" zurück.

In Figur 5 ist der Drücker 51 als separates Bauteil vorgesehen, das im zentralen Bereich des Drehknopfs 50 angeordnet ist. Bei einer alternativen Ausgestaltung wird der Drehknopf als Ganzes gedrückt, um den Druckbereich zu wechseln, und übernimmt somit auch die Funktion des Drückers.

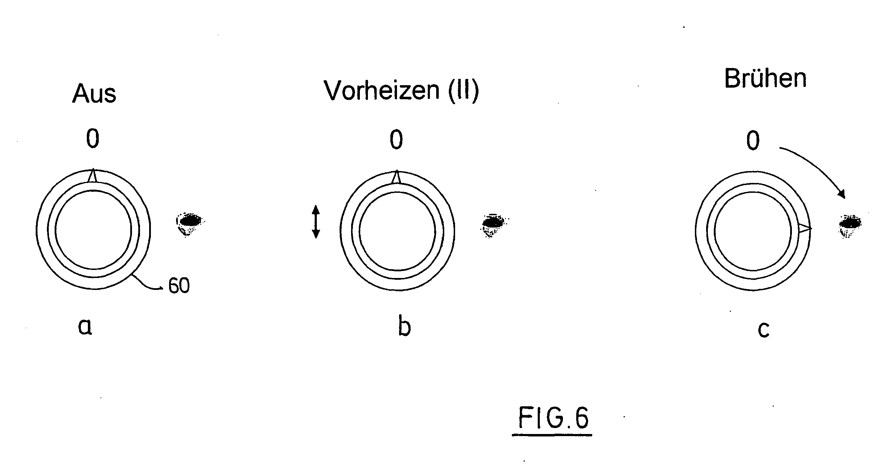

Die Figur 6 veranschaulicht in allgemeiner Weise die Bedienung bei anderen Ausführungsformen der Brühmaschine. Dabei wird der Drehknopf, hier mit 60 bezeichnet, nicht in eine Vorheiz-Stellung gedreht, sondern das Aufheizen von Brühwasser mittels der Heißwassereinrichtung auf eine vorgegebene Brühtemperatur wird durch Drücken auf den Drehknopf oder durch Ziehen an dem Drehknopf ausgelöst, wie in Figur 6b durch den Doppelpfeil angedeutet. Dabei kann es vorgesehen sein, auf den Drehknopf als Ganzes zu drücken oder auf einen am Drehknopf (vorzugsweise in dessen Zentrum) angeordnete Drücker oder Taster zu drücken. Wenn die vorgegebene Brühtemperatur erreicht ist, leuchtet eine in Figur 6 nicht eingezeichnete Kontrollleuchte auf.

Um den Brühvorgang zu starten, dreht der Benutzer den Drehknopf 60 im Uhrzeigersinn aus der mit "0" gekennzeichneten Stellung in eine Brüh-Stellung, siehe Figur 6c. Dabei kann die Brühmaschine z.B. so angesteuert werden, wie in den Ausführungsformen gemäß Figur 1 oder Figur 2 beschrieben.

Bei Varianten der Ausführungsformen gemäß Figur 6 lässt sich durch Drücken auf den Drehknopf 60 oder durch Ziehen an dem Drehknopf 60 auch eine Dampffunktion einschalten. Dabei wird die Heizeinrichtung auf eine oberhalb der Brühtemperatur liegende Temperatur eingestellt, um das Brühwasser zu verdampfen und einen Vorrat an Dampf bereitzustellen. Vorzugsweise wird die Anwahl der durch Druck auf den Drehknopf 60 eingeschalteten Funktion durch einen Farbwechsel oder ein Blinken der Kontrollleuchte angezeigt.

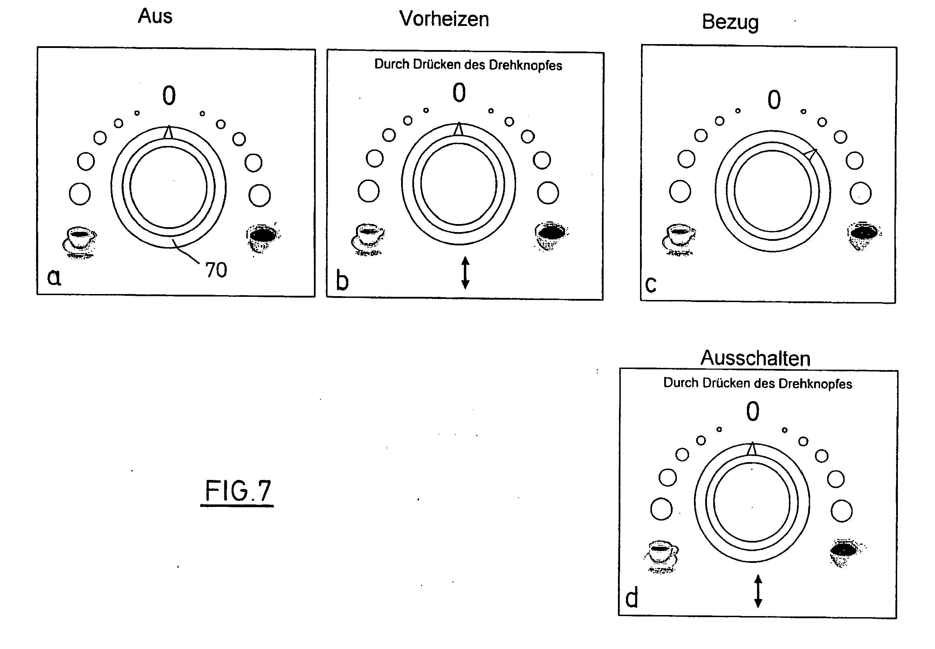

Eine konkrete Ausgestaltung einer der anhand von Figur 6 erläuterten Ausführungsformen ist in Figur 7 dargestellt. Hierin ist der Drehknopf mit 70 bezeichnet, und er lässt sich als Ganzes drücken.

In Figur 7a befindet sich der Drehknopf 70 in der Null-Stellung, und die Brühmaschine ist ausgeschaltet. Durch Drükken auf den Drehknopf 70 wird das Brühwasser auf eine vorgegebene Brühtemperatur aufgeheizt, Figur 7b, wie durch den Doppelpfeil angezeigt. Um eine vorgewählte Menge an Espresso zu brühen, dreht der Benutzer den Drehknopf 70 im Uhrzeigersinn in eine Brüh-Stellung zwischen der Null-Stellung und (oder bis zu) dem Tassensymbol, siehe Figur 7c. Während der Getränkeabgabe aus der Brühmaschine läuft der Drehknopf 70 zurück, wie bei dem Ausführungsbeispiel gemäß Figur 2 erläutert.

Mit der Brühmaschine gemäß Figur 7 kann man auch Filterkaffee aufbrühen. Um eine vorgegebene Getränkemenge auszuwählen, dreht der Benutzer den Drehknopf 70 im Gegenzeigersinn. Dann läuft der Brühvorgang bei niedrigem Brühdruck so ab, wie zuvor für das Aufbrühen von Espresso oder anhand des Ausführungsbeispiels gemäß Figur 2 beschrieben.

Um die Brühmaschine gemäß Figur 7 auszuschalten, drückt der Benutzer erneut auf den Drehknopf 70, siehe Figur 7d. Vorzugsweise wird über eine separate Kontrollleuchte angezeigt, ob die Brühmaschine eingeschaltet oder ausgeschaltet ist.

## Patentansprüche

1. Brühmaschine, die zum Fertigen eines heißen Getränks mittels einer Brühsubstanz und Brühwasser eingerichtet ist und eine Heißwassereinrichtung und eine Steuerung aufweist, wobei ein Drehknopf (30) als Bedienungselement für die Steuerung vorgesehen ist, wobei die Heißwassereinrichtung in einer Null-Stellung des Drehknopfs ausgeschaltet ist und die Steuerung dazu eingerichtet ist, in einer definierten Zwischenposition des Drehknopfs, der Vorheiz-Stellung, ein Aufheizen von Brühwasser mittels der Heißwassereinrichtung auf eine vorgegebene Brühtemperatur zu veranlassen, und bei Weiterdrehen des Drehknopfs über die Vorheiz-Stellung hinaus in eine Brüh-Stellung ein Durchleiten des aufgeheizten Brühwassers durch die Brühsubstanz zu veranlassen, wobei der Drehknopf vorzugsweise das einzige Bedienungselement der Brühmaschine ist, **dadurch gekennzeichnet, dass** der Drehknopf (30) von der Null-Stellung aus im Uhrzeigersinn in einen ersten Arbeitsbereich und im Gegenzeigersinn in einen zweiten Arbeitsbereich drehbar ist, wobei dem ersten Arbeitsbereich und dem zweiten Arbeitsbereich unterschiedliche Gerätefunktionen zugeordnet sind und wobei der erste Arbeitsbereich des Drehknopfs (30) eine Vorheiz-Stellung und eine Brüh-Stellung aufweist und der zweite Arbeitsbereich des Drehknopfs (30) eine Vorheiz-Stellung und eine Brüh-Stellung aufweist.

2. Brühmaschine nach Anspruch 1, **dadurch gekennzeichnet, dass** der Drehknopf (30) mit einer Feder gekoppelt ist, die dazu eingerichtet ist, den Drehknopf aus einer Brüh-Stellung selbsttätig in die Vorheiz-Stellung zurückzudrehen.

3. Brühmaschine nach Anspruch 1 oder 2, **dadurch gekennzeichnet, dass** der Drehknopf (30) bei Weiterdrehen über die Vorheiz-Stellung hinaus in eine als Brüh-Stellung eingerichtete End-Stellung drehbar ist, in der vorzugsweise der Drehknopf einrastet.

4. Brühmaschine nach Anspruch 3, **dadurch gekennzeichnet, dass** die Steuerung dazu eingerichtet ist, in der Endstellung des Drehknopfs (30) ein Durchleiten einer vorgegebene Menge an Brühwasser durch die Brühsubstanz zu veranlassen oder den Betrieb einer Förderpumpe für das Brühwasser für eine vorgegebene Zeitdauer zu veranlassen.

5. Brühmaschine nach Anspruch 1, **dadurch gekennzeichnet, dass** der Drehwinkel des Drehknopfs zwischen der Vorheiz-Stellung und einer Brüh-Stellung ein Maß für die Menge des durch die Brühsubstanz durchzuleitenden Brühwassers ist.

6. Brühmaschine nach Anspruch 5, **gekennzeichnet durch** einen Antrieb, vorzugsweise mit einem Uhrwerk, der dazu eingerichtet ist, den Drehknopf von einer vorgewählten Brüh-Stellung während des Durchleitens des Brühwassers **durch** die Brühsubstanz in die Vorheiz-Stellung zurückzudrehen.

7. Brühmaschine nach einem der Ansprüche 1 bis 6, **dadurch gekennzeichnet, dass** die dem ersten Arbeitsbereich und dem zweiten Arbeitsbereich zugeordneten unterschiedlichen Gerätefunktionen voneinander verschiedene Brühdrücke sind.

8. Brühmaschine nach einem der Ansprüche 1 bis 7, **dadurch gekennzeichnet, dass** die Stellungen des Drehknopfs (30) im ersten Arbeitsbereich und im zweiten Arbeitsbereich symmetrisch zueinander angeordnet sind.

9. Brühmaschine nach einem der Ansprüche 1 bis 8, **dadurch gekennzeichnet, dass** der Drehknopf zur Auswahl unterschiedlicher Gerätefunktionen, vorzugsweise zur Auswahl voneinander verschiedener Brühdrücke, axial betätigbar ist und die Steuerung dazu eingerichtet ist, die der axialen Betätigung des Drehknopfs zugeordnete Gerätefunktion auszuwählen, wobei vorzugsweise der Drehknopf mittels eines Drückers axial betätigbar und die ausgewählte Gerätefunktion mittels einer Anzeigeeinrichtung (52) anzeigbar ist.

10. Brühmaschine nach einem der Ansprüche 1 bis 9, **gekennzeichnet durch** einen Thermostaten, der dazu eingerichtet ist, bei Stellung des Drehknopfs (30) in der Vorheiz-Stellung die Temperatur des Brühwassers mittels der Heißwassereinrichtung bei der vorgegebenen Brühtemperatur zu halten.

11. Brühmaschine nach einem der Ansprüche 1 bis 10, **gekennzeichnet durch** eine Signaleinrichtung, die dazu eingerichtet ist, das Erreichen der vorgegebenen Brühtemperatur anzuzeigen, wobei die Signaleinrichtung vorzugsweise eine Kontrollleuchte aufweist, die vorzugsweise als konzentrisch zu dem Drehknopf angeordneter Leuchtring gestaltet ist.

12. Brühmaschine nach einem der Ansprüche 1 bis 11, **dadurch gekennzeichnet, dass** der Drehknopf (30) mit mindestens einer Kurvenscheibe gekoppelt ist, die dazu eingerichtet ist, in Abhängigkeit von der Stellung des Drehknopfs mit der Steuerung verbundene Mikroschalter zu betätigen.

13. Brühmaschine nach einem der Ansprüche 1 bis 12, **dadurch gekennzeichnet, dass** die Brühmaschine zur Verwendung mit einer Portionspackung, vorzugsweise einer Portionskapsel oder einem Filterpad, eingerichtet ist, die die Brühsubstanz enthält.

## Claims

1. Brewing machine, which is adapted for producing a hot beverage by means of a brewing substance and brewing water and has a hot-water device and a controller, wherein a knob (30) is provided as operating element for the control, wherein the hot-water device is turned off in a zero position of the knob, and the controller is adapted to initiate, in a defined intermediate position of the knob, the preheating position, heating of the brewing water through the hot-water device to a predetermined brewing temperature, and wherein further rotation of the knob through the preheating position into the brewing position causes the passage of the heated brewing water through the brewing substance, wherein the knob is preferably the only operating element of the brewing machine, **characterised in that** the knob (30) is rotatable from the neutral position in a clockwise direction in a first working area and counter-clockwise in a second working area, wherein the first working area and the second working area are assigned different device functions and wherein the first working area of the knob (30) has a preheating position and a brewing position and the second working area of the knob (30) has a preheating position and a brewing position.

2. Brewing machine according to claim 1, **characterised in that** the knob (30) is linked to a spring, which is designed to turn the knob back from the brewing position automatically to the preheating position.

3. Brewing machine according to claim 1 or 2, **characterised in that** the knob (30) with further rotation is rotatable beyond the preheating position to an end position arranged as a brewing position in which preferably the knob engages.

4. Brewing machine according to claim 3, **characterised in that** the controller is adapted in the end position of the knob (30) to cause the passage of a predetermined quantity of brewing water through the brewing substance, or to cause the operation of a feed pump for the brewing water for a predetermined time period.

5. Brewing machine according to claim 1, **characterised in that** the rotation angle of the knob between the preheating position and the brewing position serves as a measure of the quantity of brewing water to be passed through the brewing substance.

6. Brewing machine according to claim 5, **characterised by** a drive, preferably with a clock mechanism, which is adapted to reverse the knob from a preselected brewing position during passage of the brewing water through the brewing substance to the pre-heating position.

7. Brewing machine according to any one of claims 1 to 6, **characterised in that** the different device functions assigned to the first working area and the second working area have mutually different brewing pressures.

8. Brewing machine according to any one of claims 1 to 7, **characterised in that** the positions of the knob (30) in the first working area and second working area are arranged symmetrically to each other.

9. Brewing machine according to any one of claims 1 to 8, **characterised in that** the knob for selecting different device functions, preferably to choose mutually different brewing pressures, is axially operable, and the controller is adapted to select the device function associated with the axial operation of the knob, wherein preferably the knob is axially actuated by means of a pusher and the selected device function is displayed by means of a display device (52).

10. Brewing machine according to any one of claims 1 to 9, **characterised by** a thermostat, which is adapted, on the setting of the knob (30) in the preheating position, to keep the temperature of the brewing water by means of the hot-water device at the given brewing temperature.

11. Brewing machine according to any one of claims 1 to 10, **characterised by** a signalling device that is adapted to indicate the achievement of the predetermined brewing temperature, wherein the signalling device preferably includes an indicator light which is preferably formed as a light ring concentrically assigned to the knob.

12. Brewing machine according to any one of claims 1 to 11, **characterised in that** the knob (30) is linked with at least one cam that is adapted, depending on the position of the knob, to operate micro-switches connected to the control.

13. Brewing machine according to any one of claims 1 to 12, **characterised in that** the brewing machine is arranged for use with a portion pack, preferably a portion capsule or a filter pad, which contains the brewing substance.

## Revendications

1. Machine d'infusion qui est agencée pour préparer une boisson chaude, au moyen d'une substance à infuser et d'eau d'infusion, et présente un dispositif d'eau chaude et une commande, un bouton tournant (30) étant prévu en tant qu'élément d'actionnement pour la commande, le dispositif d'eau chaude étant coupé lorsque le bouton tournant occupe une position neutre, et la commande étant conçue pour déclencher le chauffage d'eau d'infusion au moyen du dispositif d'eau chaude, jusqu'à une température d'infusion prédéterminée, lorsque le bouton tournant occupe une position intermédiaire définie, à savoir la position de préchauffage, et, lorsque le bouton est tourné au-delà de la position de préchauffage, jusqu'à une position d'infusion, pour déclencher le passage de l'eau d'infusion chauffée, à travers la substance à infuser, le bouton tournant étant de préférence l'unique élément d'actionnement de la machine d'infusion, **caractérisée en ce que** le bouton tournant (30) peut être tourné à partir de la position neutre, dans le sens des aiguilles d'une montre, pour atteindre une première plage de fonctionnement, et dans le sens contraire des aiguilles d'une montre pour atteindre une deuxième plage de fonctionnement, des fonctions différentes de l'appareil étant associées à la première plage de fonctionnement et à la deuxième plage de fonctionnement, et la première plage de fonctionnement du bouton tournant (30) présentant une position de préchauffage et une position d'infusion, et la deuxième plage de fonctionnement du bouton tournant (30) présentant une position de préchauffage et une position d'infusion.

2. Machine d'infusion selon la revendication 1, **caractérisée en ce que** le bouton tournant (30) est couplé à un ressort qui est conçu pour ramener le bouton tournant (30) par rotation automatiquement de sa position d'infusion dans la position de préchauffage.

3. Machine d'infusion selon la revendication 1 ou 2, **caractérisée en ce que** le bouton tournant (30), lorsqu'il est tourné au-delà de la position de préchauffage, peut être amené dans une position finale prévue comme position d'infusion, dans laquelle le bouton tournant s'enclenche de préférence.

4. Machine d'infusion selon la revendication 3, **caractérisée en ce que** la commande est conçue pour déclencher le passage d'une quantité prédéterminée d'eau d'infusion à travers la substance à infuser, lorsque le bouton tournant (30) est dans la position finale, ou pour déclencher pendant un laps de temps prédéterminé le fonctionnement d'une pompe de circulation pour l'eau d'infusion.

5. Machine d'infusion selon la revendication 1, **caractérisée en ce que** l'angle de rotation du bouton tournant entre la position de préchauffage et une position d'infusion constitue une mesure de la quantité de l'eau d'infusion devant passer dans la substance à infuser.

6. Machine d'infusion selon la revendication 5, **caractérisée en ce qu'**elle comporte un moyen d'entraînement qui est doté de préférence d'un mécanisme d'horloge et est agencé pour ramener le bouton tournant par rotation d'une position d'infusion présélectionnée dans la position de préchauffage, pendant le passage de l'eau d'infusion dans la substance à infuser.

7. Machine d'infusion selon l'une des revendications 1 à 6, **caractérisée en ce que** les fonctions différentes de l'appareil, qui sont associées à la première plage de fonctionnement et à la deuxième plage de fonctionnement, sont des pressions d'infusion différentes.

8. Machine d'infusion selon l'une des revendications 1 à 7, **caractérisée en ce que** les positions du bouton tournant (30) dans la première plage de fonctionnement et dans la deuxième plage de fonctionnement sont disposées de façon symétrique l'une par rapport à l'autre.

9. Machine d'infusion selon l'une des revendications 1 à 8, **caractérisée en ce que** le bouton tournant peut être actionné axialement pour sélectionner des fonctions différentes de l'appareil, de préférence pour sélectionner des pressions d'infusion différentes, et que la commande est conçue pour sélectionner la fonction de l'appareil qui est associée à l'actionnement axial du bouton tournant, le bouton tournant pouvant de préférence être actionné axialement au moyen d'un poussoir, et la fonction choisie de l'appareil pouvant être visualisée au moyen d'un dispositif d'affichage (52).

10. Machine d'infusion selon l'une des revendications 1 à 9, **caractérisée en ce qu'**elle comporte un thermostat qui est conçu pour maintenir la température de l'eau d'infusion à la température d'infusion prédéterminée, au moyen du dispositif d'eau chaude, lorsque le bouton tournant (30) est placé dans la position de préchauffage.

11. Machine d'infusion selon l'une des revendications 1 à 10, **caractérisée en ce qu'**elle comporte un dispositif de signalisation qui est conçu pour indiquer lorsque la température prédéterminée est atteinte, le dispositif de signalisation présentant de préférence un voyant qui est de préférence réalisé sous la forme d'un anneau lumineux disposé de façon concentrique par rapport au bouton tournant.

12. Machine d'infusion selon l'une des revendications 1 à 11, **caractérisée en ce que** le bouton tournant (30) est couplé à au moins une came qui est conçue pour actionner des microrupteurs reliés à la commande, en fonction de la position du bouton tournant.

13. Machine d'infusion selon l'une des revendications 1 à 12, **caractérisée en ce que** la machine d'infusion est conçue pour être utilisée avec une portion individuelle, de préférence une capsule ou une dosette, qui contient la substance à infuser.
